# EUROPÄISCHE PATENTSCHRIFT

(11) **EP 3 844 071 B1**
(45) Veröffentlichungstag und Bekanntmachung des Hinweises auf die Patenterteilung: **28.02.2024**
(21) Anmeldenummer: 19797631.9
(22) Anmeldetag: 28.10.2019
(51) Int. Cl.: B65B 61/06, B65B 59/04, B65B 65/02

(54) **VORRICHTUNG ZUM VORBEREITEN VON BEHÄLTERN AUS KUNSTSTOFF FÜR IHRE INGEBRAUCHNAHME**
DEVICE FOR PREPARING PLASTIC CONTAINERS FOR PUTTING THE SAME INTO USE
DISPOSITIF POUR PRÉPARER DES RÉCIPIENTS EN MATIÈRE PLASTIQUE EN VUE DE LEUR UTILISATION

(30) Priorität: 23.11.2018 DE 102018009238
(43) Veröffentlichungstag der Anmeldung: 07.07.2021
(73) Patentinhaber: kocher-plastik Maschinenbau GmbH, 74429 Sulzbach-Laufen (DE)
(72) Erfinder: BAUMANN, Josua, 5056 Attelwil (CH); BURGHERR, Martin, 5000 Aarau (CH)
(74) Vertreter: Bartels und Partner, Patentanwälte
(86) Internationale Anmeldenummer: PCT/EP2019/079419
(87) Internationale Veröffentlichungsnummer: WO 2020/104142

(56) Entgegenhaltungen:
- EP-A1- 1 026 083
- EP-A1- 2 384 866
- WO-A1-2004/033306
- CN-A- 102 381 673
- CN-A- 102 501 266
- CN-Y- 201 192 857
- FR-A1- 2 644 425
- US-A- 3 583 294

## Beschreibung

Die Erfindung betrifft eine Vorrichtung zum Vorbereiten von Behältern aus Kunststoff für ihre Ingebrauchnahme mit den Merkmalen von Anspruch 1.

Im Stand der Technik werden Kunststoffbehälter mit Vorteil nach dem bekannten bottelpack^{®}-Verfahren hergestellt, bei dem ein Schlauch plastifizierten Kunststoffmaterials, wie Polyethylen oder Polypropylen, in eine Formeinrichtung hinein extrudiert, der gebildete Behälter in der Formeinrichtung steril befüllt und hermetisch verschlossen wird. Das mit hohen Taktfrequenzen hergestellte Kunststoffgut tritt aus diesen Herstellvorrichtungen in Form einer Behälterkette aus, bei der eine Mehrzahl von Einzelbehältern Seite an Seite nebeneinander liegt. Die Weiterbearbeitung erfolgt in der Weise, dass in Fortsetzung der Herstellungslinie mittels einer Stanzeinrichtung aus der Behälterkette, insbesondere in Form eines Ampullengurtes, Behälterblöcke oder Ampullenblöcke ausgestanzt werden, die je Block eine für Versand und Gebrauch geeignete Anzahl von Einzelbehältern aufweisen, wobei vielfach Ampullenblöcke vorgesehen sind, die je drei oder fünf über Trennlinien miteinander verbundene Ampullen aufweisen.

Während die Anordnung der Ampullen in Blöcken, was Verpackung und Versand anbelangt, zweckmäßig und vorteilhaft ist, gestaltet sich jedoch die Ingebrauchnahme der Einzelbehälter oder Ampullen wenig benutzerfreundlich, insbesondere wenn es sich um ein verhältnismäßig steifes Kunststoffmaterial handelt, wie dies bei Behältern aus Polypropylen der Fall ist. Um für den Benutzer das Auftrennen der Ampullenblöcke zu erleichtern, ist in DE 10 2007 060 419 B3 eine Vorrichtung der eingangs genannten Art offenbart, die es ermöglicht, mittels Schneidmessern entlang der jeweiligen Trennlinien einen Vortrenneinschnitt auszubilden, wobei die Länge des Vortrenneinschnittes relativ zur Gesamtlänge der Trennlinien so gewählt ist, dass für Verpackung und Versand ein sicherer Zusammenhalt durch die jeweils verbliebene Länge der Trennlinie beibehalten ist, das Separieren jedoch einfach und ohne großen Kraftaufwand durchführbar ist.

Bei der bekannten Vorrichtung sind an einer motorisch antreibbaren Messerwelle für an der Trennlinie der Ampullenblöcke durchzuführende Vortrenneinschnitte radial auskragende Schwingmesser angeordnet. Wegen der hohen Taktfrequenzen, die bei rationell arbeitenden Behälter-Herstellsystemen angestrebt werden, gelangen pro Transportschritt mehrere Behälter in die Vortrennstation, die daher so ausgelegt ist, dass eine entsprechende Anzahl von Schwingmessern vorhanden ist, die für den Schneidvorgang angetrieben werden müssen. Bei dem verhältnismäßig steifen Kunststoffmaterial, wie Polypropylen, ist eine verhältnismäßig große Antriebskraft für die Messerwelle erforderlich. Bei der bekannten Lösung sind die Schwingmesser an der Messerwelle daher um solche Drehwinkel versetzt angeordnet, dass die Vortrenneinschnitte zeitlich zueinander versetzt erfolgen und die Behälter über die Zeitdauer mehrerer Einschnitte in der Vortrennstation verbleiben, was zu einer Begrenzung der erreichbaren Taktfrequenz führt.

Die FR 2 644 425 A1 beschreibt eine Vorrichtung zum Vorbereiten von Behältern aus Kunststoff für ihre Ingebrauchnahme mit den Merkmalen im Oberbegriff von Anspruch 1, wobei die Behälter in Behälterblöcken Seite an Seite entlang von Trennlinien aneinander angeformt sind, entlang derselben die einzelnen Behälter zum Gebrauch voneinander abtrennbar sind und entlang derselben zumindest teilweise Schneidmesser bewegbar geführt sind, wobei das jeweilige Schneidmesser auf einem Schlitten angeordnet zwischen einer Gebrauchs- und einer Nicht-Gebrauchsstellung hin und her verfahrbar geführt ist, und wobei das jeweilige Schneidmesser in seiner Nicht-Gebrauchsstellung abgesenkt von den voneinander zu trennenden Behältern entfernt ist.

Weitere Vorrichtungen zum Vorbereiten von Behältern aus Kunststoff gehen aus der CN 201 192 857 Y, der CN 102 501 266 A, der CN 102 381 673 A und der EP 2 384 866 A1 hervor.

Ausgehend von diesem Stand der Technik stellt sich die Erfindung die Aufgabe, eine Vorrichtung der eingangs genannten Gattung zur Verfügung zu stellen, die sich, bei Beibehalten der im Stand der Technik erreichten Vorteile, durch ein weiter verbessertes Betriebsverhalten auszeichnet.

Erfindungsgemäß ist diese Aufgabe durch eine Vorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass in der Gebrauchsstellung das jeweilige Schneidmesser mittels einer Schwenkeinrichtung angehoben entlang der jeweils zuordenbaren Trennlinie verfährt. Anstelle eines Messerschlags in der Art einer Guillotine erfolgt so der jeweilige Schneidvorgang als Ziehschnitt durch die in angehobener Gebrauchsstellung befindlichen Schneidmesser bei einer Verfahrbewegung des die Messer tragenden Schlittens. Mittels eines einfach ausgebildeten Antriebs lassen sich dadurch mittels einer entsprechenden Anzahl von Schneidmessern gleichzeitig die Vortrenneinschnitte an mehreren Ampullenblöcken, die jeweils mehrere Ampullen aufweisen, schneller, sicherer und besonders rationell durchführen.

Bei vorteilhaften Ausführungsbeispielen sind die Schneidmesser in Gruppen zusammengefasst auf einem Messerbalken angeordnet, der mit der Schwenkeinrichtung vorzugsweise lösbar verbunden ist. Service- und Wartungsarbeiten gestalten sich bei dieser Anordnung schnell und einfach, da für das Wechseln von Schneidmessern die Schneideinheit mit dem Messerbalken als Ganzes abnehm- und austauschbar ist. Durch die zu Gruppen zusammengefasste Anordnung der Schneidmesser auf dem Messerbalken lassen sich auch die einem jeweiligen Ampullenblock zugeordneten Schneidmesser als Gruppe gemeinsam wechseln.

Die Schwenkeinrichtung kann mit Vorteil mindestens einen Aktuator aufweisen, der in einer betätigten Stellung den Messerbalken um eine Schwenkachse auf die Behälterblöcke zuschwenkt. In vorteilhafter Weise kann der jeweilige Aktuator einen Linearantrieb aufweisen, der hydraulisch oder elektrisch betätigt ist.

Bei vorteilhaften Ausführungsbeispielen ist die Schwenkeinrichtung auf dem Schlitten montiert, der mittels mindestens eines weiteren Aktuators längsverfahrbar entlang von Führungen einer Ständereinrichtung geführt ist. Dieser Aktuator kann ebenfalls mit Vorteil durch einen elektrisch oder hydraulisch betätigten Linearantrieb gebildet sein. Die Schlittenführung ermöglicht auf einfache und sichere Weise die Übertragung hoher vom Linearantrieb erzeugter Verschiebekräfte auf den Messerbalken, so dass auch bei einer größeren Anzahl von Schneidmessern die Schneidkraft für optimale Vortrenneinschnitte realisierbar ist.

Mit Vorteil ist die Anordnung so getroffen, dass die Behälterblöcke eine fortlaufende Blockkette bildend in einer Ebene und in der Gebrauchsstellung der Schneidmesser mit ihren Trennlinien entlang derselben verlaufend in der Ständereinrichtung geführt sind. Dadurch gelangen die Behälterblöcke in auf die Ebene des Messerbalkens ausgerichteter Führungsbahn in die Vortrennstation der Ständereinrichtung.

Bei vorteilhaften Ausführungsbeispielen ist in der Ständereinrichtung eine Niederhaltereinrichtung quer zur Verfahrbewegung der Blockkette auf und ab längsverfahrbar geführt, die in ihrer Halteposition abgelassen auf die Blockkette eine Kraft ausübt, die der An- oder Eingriffskraft der Schneidmesser entgegenwirkt. Durch die Lagesicherung der Behälterblöcke beim Schneidvorgang ist der Vortrenneinschnitt mit gewünschter Schnittlänge und -position genau durchführbar.

Mit Vorteil kann die Anordnung so getroffen sein, dass an der Niederhaltereinrichtung Zentriermittel angeordnet sind, die bei der abgelassenen Halteposition die Blockkette quer zur Richtung der Verfahrbewegung positionieren. Für den Schneidvorgang ist dadurch sichergestellt, dass die Schneidmesser genau auf die Trennlinien ausgerichtet sind.

Bei vorteilhaften Ausführungsbeispielen weist die Schwenkeinrichtung, in der Art einer kinematischen Kette miteinander verbunden, einen Lenkertrieb auf, der an seinem einen freien Ende an dem jeweilig zuordenbaren Aktuator und mit seinem anderen freien Ende an einem Schwenktisch angelenkt ist, der den Messerbalken, vorzugsweise als Einsteckteil konzipiert, trägt. Mit Vorteil kann bei einem als Einsteckteil ausgebildeten Messerbalken als Aufnahme für diesen am Schwenktisch eine Art Schublade vorgesehen sein, in die der Messerbalken in Form einer rechteckförmigen Leiste einschiebbar und für Messerwechsel herausziehbar ist. Verletzungen bei einer Bedienperson, die Messerwechsel vorzunehmen hat, sind somit vermieden.

Mit Vorteil kann die Anordnung hierbei so getroffen sein, dass der Messerbalken, von einer haubenartigen Schutzeinrichtung abgedeckt, sich vom Schwenktisch entnehmen und, mit ein- oder ausgewechselten Messern versehen, wieder dort einsetzen lässt. Die Messerschublade ist hierbei so ausgebildet, dass der Messerbalken zusammen mit seiner Schutzhaube einschiebbar ist und dass sich die Schutzhaube bei in der Schublade verbleibendem Messerbalken wieder herausziehen lässt.

Bei vorteilhaften Ausführungsbeispielen weisen die einzelnen Schneidmesser, auf dem Messerbalken zu einzelnen Inseln zusammengefasst, so viele Schneidmesser auf, wie Trennlinien zum zumindest vorläufigen Abtrennen der Behälter eines Behälterblocks untereinander und/oder von einem anderen, benachbarten Behälterblock benötigt werden.

Nachstehend ist die Erfindung anhand eines in der Zeichnung dargestellten Ausführungsbeispiels im Einzelnen erläutert. Es zeigen:
- Fig. 1: eine perspektivische Schrägansicht des Ausführungsbeispiels der erfindungsgemäßen Vorrichtung mit einer schematisch vereinfacht gezeichneten Zuführeinrichtung für die Zufuhr von Behälter-Blockketten zur Ständereinrichtung der Vorrichtung;
- Fig. 2: eine perspektivische Schrägansicht, die den Schneidmessern und ihrem Antrieb zugehörigen Vorrichtungsteil des Ausführungsbeispiels zeigt;
- Fig. 3: eine abgebrochen gezeichnete Teilseitenansicht der in der Ständereinrichtung der Vorrichtung befindlichen Vortrennstation, wobei der Betriebszustand "Klemmen, Zentrieren" dargestellt ist;
- Fig. 3a: eine vergrößert gezeichnete Teildarstellung des in Fig. 3 mit A bezeichneten Bereichs;
- Fig. 4: eine Seitenansicht der die Vortrennstation enthaltenden Ständereinrichtung, wobei der Betriebszustand "Einstechen" dargestellt ist;
- Fig. 5: eine der Fig. 4 entsprechende Darstellung, wobei der Betriebszustand "Abheben, Ausfahren" dargestellt ist;
- Fig. 6: eine perspektivische Schrägansicht des gesondert dargestellten Messerbalkens des Ausführungsbeispiels der Vorrichtung;
- Fig. 7: eine perspektivische Schrägansicht einer gesondert dargestellten Schneidmesser-Schutzhaube mit zugeordnetem Haubenhalter; und
- Fig. 8: eine Vorderansicht eines Teils eines mit Vortrenneinschnitten versehenen Ampullenblocks.

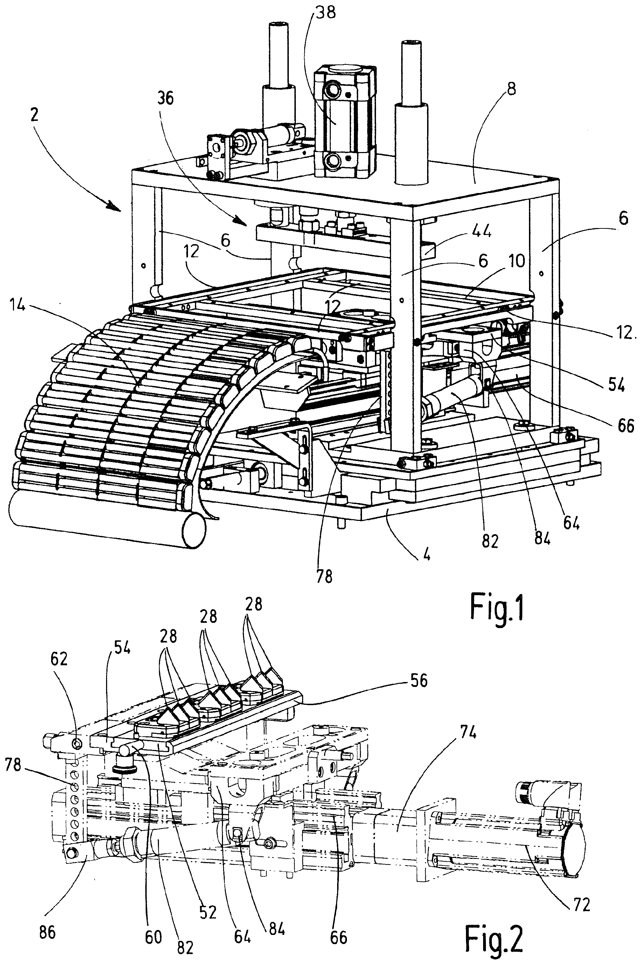

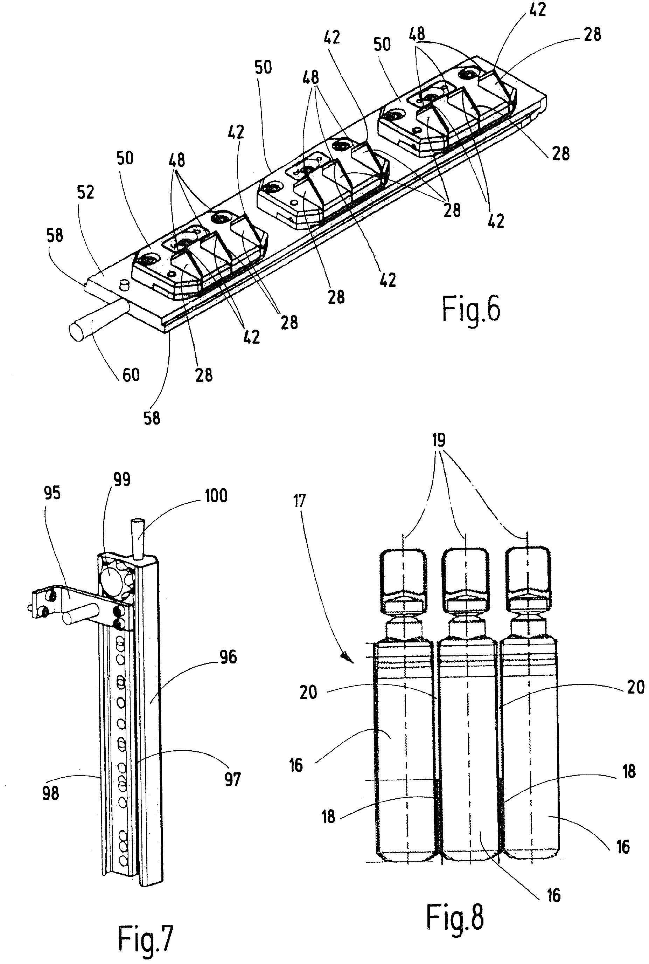

Das in den Figuren dargestellte Ausführungsbeispiel der erfindungsgemäßen Vorrichtung weist eine Ständereinrichtung 2 mit einer Grundplatte 4 mit quadratischem Umriss auf. Von den vier Eckbereichen der Grundplatte 4 erstrecken sich in Vertikalrichtung Tragholme 6 nach oben, die durch rechteckförmige Leisten gebildet sind, die den Träger für eine ebene Deckplatte 8 bilden. Auf etwa halber Höhe sind die Tragholme 6 über einen Zwischenrahmen 10 mit Traversen 12 verbunden. Unterhalb der in Fig. 1 vorne liegenden Traverse 12 bildet eine bogenförmige Transportbahn 14 die Zuführeinrichtung, über die Behälterketten (die nicht dargestellt sind) zur Vortrennstation zugeführt werden, die sich in der Ständereinrichtung 2 unterhalb des Zwischenrahmens 10 befindet. Beim vorliegenden Beispiel gelangen über die Transportbahn 14 drei Blockketten zur Vortrennstation, von denen jede Kette aus aufeinanderfolgenden Ampullenblöcken 17 gebildet ist, die jeweils vier Ampullen 16 aufweisen, von denen in Fig. 8 drei gezeigt sind und die an Trennlinien 18 miteinander verbunden sind.

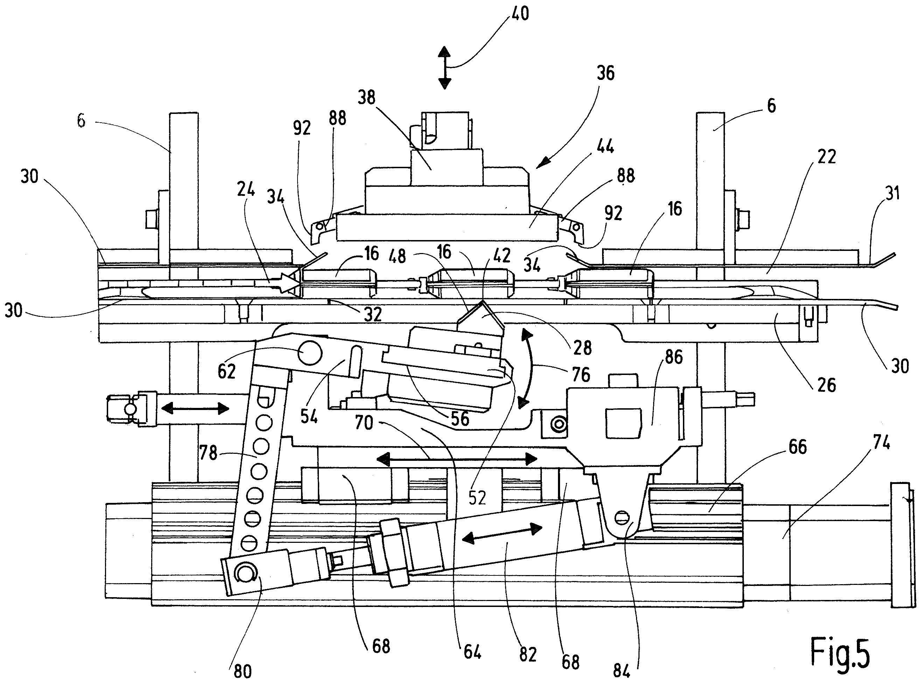

In den (nicht gezeigten) Blockketten sind die Ampullen 16 so angeordnet, dass ihre Längsachsen 19 in Zuführrichtung verlaufen. Die Vortrennstation weist anschließend an die drei Blockketten zuführende Transportbahn 14 eine Führungsbahn 22 auf, durch die die Blockketten mit den aufeinanderfolgenden Ampullenblöcken 17, die aus je vier Ampullen 16 gebildet sind, in der in Fig. 5 mit Pfeil 24 gezeichneten Vorschubrichtung im Takt der Behälterherstelleinrichtung hindurchbewegt werden. Die Führungsbahn 22 in Form eines sich über die Breite der Blockketten erstreckenden Kanals ist an der Unterseite durch ein unteres Führungsblech 30 und an der Oberseite durch ein oberes Führungsblech 31 begrenzt. Das untere Führungsblech 30 ist von einem Tisch getragen, der im Abstand voneinander verlaufende Tragbalken 26 aufweist. Im unteren Führungsblech 30 befinden sich in der Vorschubrichtung verlaufende Schlitze 32 (s. Fig. 5), die auf die Trennlinien 18 der die Führungsbahn 22 durchlaufenden Ampullenblöcke 17 ausgerichtet sind und von unten her den Durchgriff von Schneidmessern 28 ermöglichen. Das obere Führungsblech 31 weist eine zentrale Aussparung auf, die sich über die gesamte Breite der Führungsbahn 22 erstreckt und von oben her den Zutritt einer Klemm- und Halteeinrichtung 36 zu den Blockketten ermöglicht.

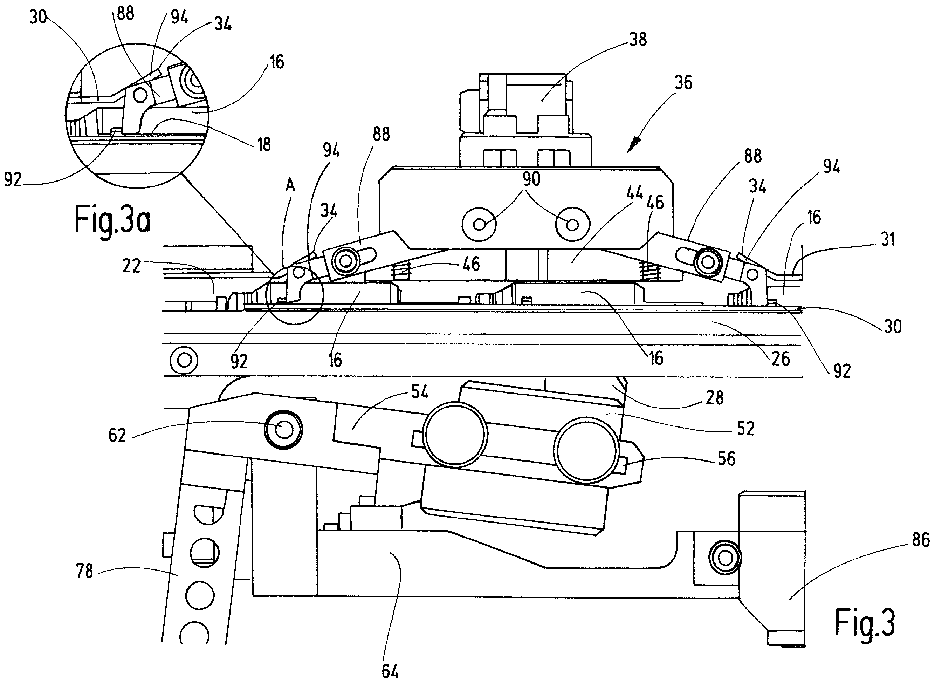

In Vorschubrichtung ist die Aussparung durch hochgestellte Endränder 34 des oberen Führungsbleches 31 begrenzt. Die Halteeinrichtung 36 weist eine Druckplatte 44 auf, die sich näherungsweise über die in Vorschubrichtung (Pfeil 24) gesehene Länge der Aussparung des Führungsbleches 31 und die senkrecht zur Zeichnungsebene der Fig. 3 bis 5 gemessene Breite der Aussparung erstreckt. Die Druckplatte 44 ist mittels eines auf der Deckplatte 8 (Fig. 1) der Ständereinrichtung 2 gelagerten Linearantriebs 38 in Vertikalrichtung hin und her verfahrbar, wie in Fig. 5 mit Doppelpfeil 40 angedeutet ist.

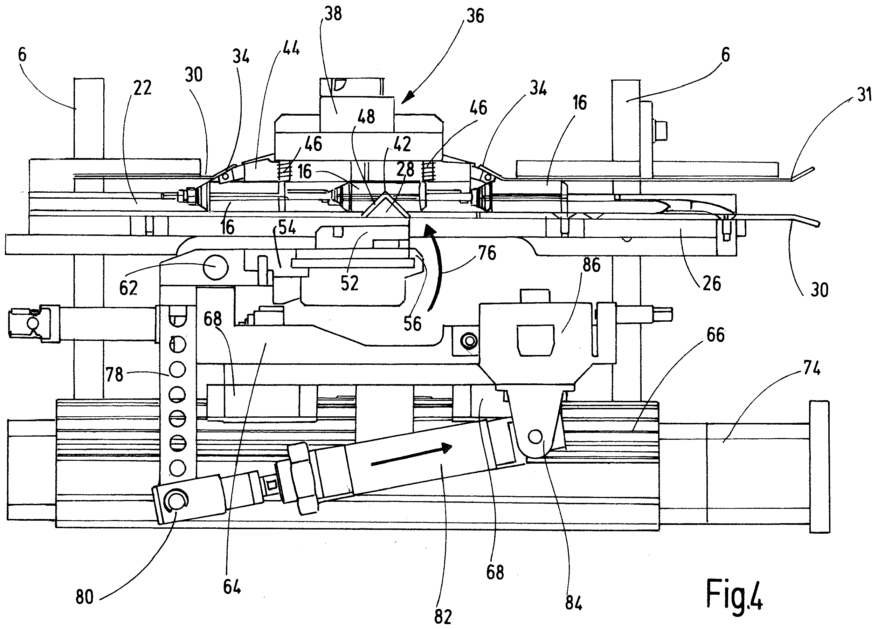

Wie in Fig. 3 bis 5 und am deutlichsten in Fig. 3 gezeigt ist, weist die Halteeinrichtung 36 Paare von seitlich auskragenden Zentrierarmen 88 auf, von denen lediglich ein Paar in der Zeichnung sichtbar ist. Die Arme 88 sind um Schwenkstellen 90 (Fig. 3) der Druckplatte 44 schwenkbar und mittels Zugfedern 46 für eine Schwenkbewegung nach unten vorgespannt. An ihren freien Enden weisen die Arme 88 Zentrierfinger 92 auf. Die Fig. 3 zeigt den Betriebszustand des Zentrieren und Haltens, bei dem die Halteeinrichtung 36 nach unten bewegt ist und die Druckplatte 44 die Ampullen 16 in der Führungsbahn 22 festlegt, d.h. gegen vertikale und horizontale Bewegung sichert. Vor Erreichen der festlegenden Anlage der Druckplatte 44 an den Ampullen 16 sind die Zentrierfinger 92 mittels der von den Zugfedern 46 ausgeübten Vorspannung der Arme 88 mit den Ampullen 16 in zentrierenden Eingriff gekommen, so dass die Ampullenblöcke 17 vor dem Klemmen durch die Druckplatte 44 genau zentriert sind. Wie am deutlichsten die Fig. 3a zeigt, sind in den aufgestellten Endrändern 34 des oberen Führungsbleches 31 Schlitze 94 für den Durchgriff der Zentrierfinger 92 gebildet. Nach dem Zentrieren und Halten setzt sich der Prozess mit dem in Fig. 4 gezeigten Arbeitsschritt "Einstechen" fort.

Wie den Fig. 2 sowie 4 bis 6 entnehmbar ist, sind die Schneidmesser 28 jeweils aus einem Messerblatt in Dreieckform gebildet und sind von Messerträgern 50 mit zuoberst befindlicher Spitze 42 (s. Fig. 4 bis 6) gehalten. An dem Schenkel der Dreieckform, der der Vorschubrichtung (Pfeil 24 in Fig. 5) entgegengerichtet ist, ist am jeweiligen Schneidmesser 28 eine Schneidkante 48 gebildet. Die Schneidmesser 28 sind auf den Messerträgern 50 in Form flacher Blöcke zu Dreiergruppen zusammengefasst, die auf einem Messerbalken 52 durch Verschrauben lösbar angebracht sind. Der Messerbalken 52, s. Fig. 6, hat die Form einer leistenartigen Platte mit rechteckförmigem Querschnitt. Die Messerträger 50 sind auf dem Messerbalken 52 in der Art von gleichmäßig verteilten, voneinander beabstandeten Inseln so angeordnet, dass sich die Blattebenen der Schneidmesser 28 parallel zur Vorschubrichtung erstrecken. Der Messerbalken 52 ist, s. Fig. 2, auf einem Schwenktisch 54 gelagert, wobei die Lagerung durch eine mit 56 bezeichnete Messerschublade gebildet ist, in die der Messerbalken 52 einschiebbar und aus der er zum Messerwechsel herausziehbar ist. In der Messerschublade 56 ist hierfür eine Einschubführung gebildet, die seitliche, am Messerbalken 52 vorstehende Führungsleisten 58, s. Fig. 6, übergreift. Als Handhabe für das Einschieben und Herausziehen weist der Messerbalken 52 einen an einer Stirnseite vorstehenden Zapfen 60 auf.

Der Schwenktisch 54 ist um eine Schwenkachse 62 kippbar, die horizontal und zur Führungsbahn 22 senkrecht verläuft und an einem eine Verfahreinheit bildenden Schlitten 64 gelagert ist. Die Ständereinrichtung 2 weist eine zur Führungsbahn 22 parallel verlaufende Führung 66 auf, an der der Schlitten 64 mittels Schlittenführungen 68 in beiden Richtungen verfahrbar ist, wie in Fig. 5 mit Doppelpfeil 70 angegeben ist. Für diese Verfahrbewegungen sind die Schlittenführungen 68 mit einem durch einen Elektromotor (Fig. 2) betätigten Linearantrieb 74 gekuppelt.

Die Schwenkeinrichtung zum Erzeugen der in Fig. 5 mit Doppelpfeil 76 angegebenen Schwenkbewegungen des Schwenktisches 54 um die Schwenkachse 62 des Schlittens 64 weist einen Lenker 78 auf, der im Abstand von der Schwenkachse 62 mit dem Schwenktisch 54 fest verbunden ist. Das freie Ende des Lenkers 78 ist mit einer Anlenkstelle 80 am Ende der Kolbenstange eines Hydraulikzylinders 82 gelenkig verbunden, dessen Zylindergehäuse wiederum an einer Anlenkstelle 84 mit einem Koppelglied 86 gelenkig verbunden ist, das fester Bestandteil des Schlittens 64 ist. Die Verfahreinheit des Schlittens 64 mit Schwenktisch 54 und Schneidmessern 28 ist bei dieser Anordnung sowohl horizontal entlang der Führung 66 verfahrbar als auch um die Achse 62 schwenkbar.

Für das Einstechen wird die Kolbenstange des Hydraulikzylinders 82 eingefahren, so dass der Lenker 78 und damit der Schwenktisch 54 entgegen dem Uhrzeigersinn schwenken, der Messerbalken 52 dadurch in Richtung des Pfeiles 76 nach oben schwenkt und die Spitze 42 der Messer 28 an den Trennlinien 18 in den Kunststoff der Ampullen 16 eingestochen wird. Bei dieser in Fig. 4 gezeigten Schwenkposition wird der Linearantrieb 74 so betätigt, dass der Schlitten 64 mit dem in angehobener Schwenkstellung befindlichem Messerbalken 52 in Fig. 4 nach links verfährt, so dass die Schneidkanten 48 der eingestochenen Messer 28 in einem Ziehschnitt die Vortrenneinschnitte 20 (Fig. 8) bilden. Anschließend werden die Komponenten in den in Fig. 5 gezeigten Zustand des Aushebens der Halteeinrichtung 36 und des darauffolgenden Vorschubschrittes der vorgeschnittenen Ampullenblöcke 17 gebracht. Hierzu verfährt die Halteeinrichtung 36 in die angehobene Position von Fig. 5, und der Hydraulikzylinder 82 fährt die Kolbenstange aus, so dass sich der Schwenktisch 54 im Uhrzeigersinn schwenkt und die Spitzen 42 der Messer 28 außer Eingriff mit der Führungsbahn 22 sind. Der Linearantrieb 74 bewegt die Verfahreinheit des Schlittens 64 wieder nach rechts in die Ausgangsstellung für das Durchführen eines darauffolgenden Einstechvorgangs.

Als Hilfseinrichtung, die den Vorgang des Messerwechsels für das Personal bequemer und sicherer gestaltet, ist eine in Fig. 7 gezeigte Messerschutzhaube 96 vorgesehen, die durch eine Profilleiste gebildet ist. Auf der in Fig. 7 sichtbaren Seite ist das Profil offen, während es auf der gegenüberliegenden Seite eine geschlossene Haube bildet, deren Form an die dreieckige Kontur der Schneidmesser 28 angepasst ist. Auf der offenen Profilseite sind die Ränder der Profilschenkel 97 und 98 derart umgelegt, dass sie eine Führung für die am Messerbalken 52 vorstehenden Führungsleisten 58 bilden. Die Schutzhaube 96 ist daher mit ihrem in Fig. 7 untenliegenden Ende auf den Messerbalken 52 aufschiebbar. Die Messerschublade 56 am Schwenktisch 54 ist so ausgebildet, dass sie einen Einschub für die Einheit aus Messerbalken 52 mit aufgeschobener Schutzhaube 96 bildet, so dass für den Messereinbau die ganze Einheit einschiebbar und sodann die Haube 96 abziehbar ist. Zum Messerausbau ist entsprechend die Haube 96 einschiebbar, um dann die ganze Einheit Haube 96 und Messerbalken 52 zu entnehmen. Für die Handhabung der Haube 56 ist am geschlossenen Stirnende ein Zapfen 100 als Handhabe vorgesehen. Um sicherzustellen, dass beim normalen Prozessbetrieb die Messerplatte 52 ohne Schutzhaube 96 eingesetzt ist, ist an der Ständeeinrichtung 2 ein in Fig. 7 gezeigter Halter 95 angebracht, an dem die Haube 96 bei Nichtgebrauch mittels einer Klemmschraube 99 festlegbar ist. Diese Sicherheitseinrichtung kann hierbei einen Sensor aufweisen, der das Vorhandensein der Haube 96 am Halter 95 erkennt und in diesem Fall den Betrieb der Vorrichtung freigibt. Mit der erfindungsgemäßen Vorrichtung lassen sich Trennlinien 18 nicht nur für eine spätere, erleichterte Trennung der Behälter 16 von Hand voneinander mit reduzierter Wanddicke vorkonfektionieren, sondern vielmehr lässt sich bei entsprechender Schnitttiefe auch unmittelbar im Bedarfsfall eine Trennung der Behälter 16 eines Blockes 17 voneinander herbeiführen, beispielsweise um die derart voneinander vollständig getrennten Behälter 16 in eine Verpackung einzeln (nicht dargestellt) als Verkaufseinheit an Anwender zu verkaufen.

## Patentansprüche

1. Vorrichtung zum Vorbereiten von Behältern (16) aus Kunststoff für ihre Ingebrauchnahme, die in Behälterblöcken (17) Seite an Seite entlang von Trennlinien (18) aneinander angeformt sind, entlang derselben die einzelnen Behälter (16) zum Gebrauch voneinander abtrennbar sind und entlang derselben zumindest teilweise Schneidmesser (28) bewegbar geführt sind, wobei das jeweilige Schneidmesser (28) auf einem Schlitten (64) angeordnet zwischen einer Gebrauchs- und einer Nicht-Gebrauchsstellung hin und her verfahrbar geführt ist, und wobei das jeweilige Schneidmesser (28) in seiner Nicht-Gebrauchsstellung abgesenkt von den voneinander zu trennenden Behältern (16) entfernt ist, **dadurch gekennzeichnet, dass** in der Gebrauchsstellung das jeweilige Schneidmesser (28) mittels einer Schwenkeinrichtung (54, 78, 82) angehoben entlang der jeweils zuordenbaren Trennlinie (18) verfährt.

2. Vorrichtung nach Anspruch 1, **dadurch gekennzeichnet, dass** die Schneidmesser (28) in Gruppen (50) zusammengefasst auf einem Messerbalken (52) angeordnet sind, der mit der Schwenkeinrichtung (54, 78, 82) vorzugsweise lösbar verbunden ist.

3. Vorrichtung nach Anspruch 1 oder 2, **dadurch gekennzeichnet, dass** die Schwenkeinrichtung (54, 78, 82) mindestens einen Aktuator (82) aufweist, der in einer betätigten Stellung den Messerbalken (52) um eine Schwenkachse (62) auf die Behälterblöcke (17) zuschwenkt.

4. Vorrichtung nach einem der vorstehenden Ansprüche, **dadurch gekennzeichnet, dass** die Schwenkeinrichtung (54, 78, 82) auf dem Schlitten (64) montiert ist, der mittels mindestens eines weiteren Aktuators (74) längsverfahrbar entlang von Führungen (66) einer Ständereinrichtung (2) geführt ist.

5. Vorrichtung nach einem der vorstehenden Ansprüche, **dadurch gekennzeichnet, dass** die Behälterblöcke (17) eine fortlaufende Blocckette bildend in einer Ebene (26) und in der Gebrauchsstellung der Schneidmesser (28) mit ihren Trennlinien (18) entlang derselben verlaufend in der Ständereinrichtung (2) geführt sind.

6. Vorrichtung nach einem der vorstehenden Ansprüche, **dadurch gekennzeichnet, dass** in der Ständereinrichtung (2) eine Niederhaltereinrichtung (36) quer zur Verfahrbewegung der Blockkette (18) auf und ab längsverfahrbar geführt ist, die in ihrer Halteposition abgelassen auf die Blockkette (17) eine Kraft ausübt, die der An- oder Eingriffskraft der Schneidmesser (28) entgegenwirkt.

7. Vorrichtung nach einem der vorstehenden Ansprüche, **dadurch gekennzeichnet, dass** an der Niederhaltereinrichtung (36) Zentriermittel (88, 92) angeordnet sind, die bei der abgelassenen Halteposition die Blockkette (17) quer zur Richtung der Verfahrbewegung positionieren.

8. Vorrichtung nach einem der vorstehenden Ansprüche, **dadurch gekennzeichnet, dass** die Schwenkeinrichtung (54, 78, 82), in der Art einer kinematischen Kette miteinander verbunden, einen Lenkertrieb (78, 80) aufweist, der an seinem einen freien Ende an dem jeweilig zuordenbaren Aktuator (82) und mit seinem anderen freien Ende an einem Schwenktisch (54) angelenkt ist, der den Messerbalken (52), vorzugsweise als Einsteckteil konzipiert, trägt.

9. Vorrichtung nach einem der vorstehenden Ansprüche, **dadurch gekennzeichnet, dass** der Messerbalken (52), von einer haubenartigen Schutzeinrichtung (96) abgedeckt, sich vom Schwenktisch (54) entnehmen und, mit ein- oder ausgewechselten Messern (28) versehen, wieder dort einsetzen lässt.

10. Vorrichtung nach einem der vorstehenden Ansprüche, **dadurch gekennzeichnet, dass** auf dem Messerbalken (52) die einzelnen Schneidmesser (28), zu Inseln (50) zusammengefasst, so viele Schneidmesser (28) aufweisen, wie Trennlinien (18) zum zumindest vorläufigen Abtrennen der Behälter (16) eines Behälterblockes (17) untereinander und/oder von einem anderen, benachbarten Behälterblock (17) benötigt werden.

## Claims

1. Device for preparing plastic containers (16) for putting into use, wherein the containers are formed in container blocks (17) side by side along separating lines (18) with respect to one another, along which the individual containers (16) can be separated from one another for use and along which cutting blades (28) can at least partially be movably guided, the respective cutting blade (28) being arranged on a carriage (64) and guided such that it can be displaced to and from between a usage position and a non-usage position, and wherein the respective cutter blade (28), lowered in its non-usage position, is at a distance from the containers (16) to be separated from one another, **characterised in that**, in the usage position, the respective cutter blade (28) is displaced, raised by a swivel apparatus (54, 78, 82), along the respective assignable separating line (18).

2. Device according to claim 1, **characterised in that** the cutter blades (28), combined in groups (50), are arranged on a cutter bar (52), which is preferably detachably connected to the swivel apparatus (54, 78, 82).

3. Device according to either claim 1 or claim 2, **characterised in that** the swivel apparatus (54, 78, 82) comprises at least one actuator (82), which, in an actuated position, swivels the cutter bar (52) around a swivel axis (62) towards the container blocks (17).

4. Device according to any of the preceding claims, **characterised in that** the swivel apparatus (54, 78, 82) is mounted on the carriage (64), which is guided such that it can be displaced longitudinally along guides (66) of a stand apparatus (2) by means of at least one further actuator (74).

5. Device according to any of the preceding claims, **characterised in that** the container blocks (17) are guided in the stand apparatus (2), forming a continuous block chain in one plane (26) and, in the usage position of the cutter blades (28), extending with their separating lines (18) along the same plane.

6. Device according to any of the preceding claims, **characterised in that** a hold-down device (36) is guided in the stand apparatus (2) across the displacement motion of the block chain (18) such that it can be displaced longitudinally up and down, exerting a force on the block chain (17) when lowered in its holding position, said force counteracting the contact or engagement force of the cutter blades (28).

7. Device according to any of the preceding claims, **characterised in that** centring means (88, 92) are arranged on the hold-down device (36), which position the block chain (17) across the direction of the displacement movement when in the lowered holding position.

8. Device according to any of the preceding claims, **characterised in that** the swivel apparatus (54, 78, 82), in the form of an interconnected kinematic chain, comprises a steering drive (78, 80), one free end of which is articulated to the respective assignable actuator (82) and the other free end of which is articulated to a swivel table (54) which supports the cutter bar (52), preferably designed as an insertion part.

9. Device according to any of the preceding claims, **characterised in that** the cutter bar (52), covered by a hood-like protective apparatus (96), can be removed from the swivel table (54) and used again in this location when the blades (28) have been replaced or exchanged.

10. Device according to any of the preceding claims, **characterised in that** the individual cutter blades (28) on the cutter bar (52), combined to form islands (50), have as many cutter blades (28) as there are separating lines (18) that are required to at least temporarily separate the containers (16) of a container block (17) from one another and/or from another, adjacent container block (17).

## Revendications

1. Installation de préparation de récipients (16) en matière plastique pour leur mise en utilisation, qui sont formés les uns à côté des autres en blocs (17) de récipients côte à côte le long de lignes (18) de séparation, le long desquelles les divers récipients (16) peuvent, pour l'utilisation, être séparés les uns des autres et le long desquelles au moins en partie des couteaux (28) de coupe sont guidés avec possibilité de se déplacer, dans lequel le couteau (28) respectif de coupe, monté sur un chariot (64), peut aller et venir entre une position d'utilisation et une position de non utilisation, et dans lequel le couteau (28) respectif de coupe est éloigné des récipients (16) à séparer les uns des autres en étant abaissé dans sa position de non utilisation, **caractérisée en ce que,** dans la position d'utilisation, le couteau (28) respectif de coupe se déplace le long de la ligne (18) de séparation, qui peut lui appartenir respectivement, en étant soulevé au moyen d'un dispositif (54, 78, 82) de pivotement.

2. Installation suivant la revendication 1, **caractérisée en ce que** les couteaux (28) sont montés en étant rassemblés en des groupes (50) sur une rampe (52) de couteaux, qui est reliée, de préférence de manière amovible, au dispositif (54, 78, 82) de pivotement.

3. Installation suivant la revendication 1 ou 2, **caractérisée en ce que** le dispositif (54, 78, 82) de pivotement a au moins un actionneur (82), qui, dans une position actionnée, fait pivoter la rampe (52) de couteaux autour d'un axe (62) de pivotement sur les blocs (17) de récipients.

4. Installation suivant l'une des revendications précédentes, **caractérisée en ce que** le dispositif (54, 78, 82) de pivotement est monté sur le chariot (64), qui, au moyen d'un autre actionneur (74), est guidé, avec possibilité de se déplacer longitudinalement, le long de glissières (66) d'un dispositif (2) de support.

5. Installation suivant l'une des revendications précédentes, **caractérisée en ce que** les blocs (17) de récipients sont guidés dans le dispositif (2) de support en formant une chaîne de blocs continue dans un plan (26) et en s'étendant, dans la position d'utilisation des couteaux (28) de coupe par leurs lignes (18) de séparation le long de celles-ci.

6. Installation suivant l'une des revendications précédentes, **caractérisée en ce que**, dans le dispositif (2) de support, est guidé, avec possibilité de se déplacer longitudinalement en aller et retour transversalement au mouvement de déplacement de la chaîne (18) de blocs, un dispositif (36) de maintient vers le bas, qui, laissé dans sa position de maintien, applique, à la chaîne (17) de blocs, une force, qui s'oppose à la force d'attaque ou de pénétration des couteaux (28) de coupe.

7. Installation suivant l'une des revendications précédentes, **caractérisée en ce que**, sur le dispositif (36) de maintien vers le bas, sont montés des moyens (88, 92) de centrage, qui, lorsque la position de maintien est quittée, mettent la chaîne (17) de blocs en position transversalement à la direction du mouvement de déplacement.

8. Installation suivant l'une des revendications précédentes, **caractérisée en ce que** le dispositif (54, 78, 82) de pivotement a, relié entre eux à la manière d'une chaîne cinématique, une transmission (78, 80) à bras, qui est articulée, à sa une extrémité libre, à l'actionneur (82), qui peut lui appartenir respectivement et, par son autre extrémité libre, à une table (54) de pivotement, qui porte la rampe (52) de couteaux, conçue de préférence sous la forme d'une pièce à enficher.

9. Installation suivant l'une des revendications précédentes, **caractérisée en ce que** la rampe (52) de couteaux est recouverte d'un dispositif (96) de protection de type en hotte, peut être prélevée de la table (54) de pivotement et, munie de couteaux (28) montés ou remplacés, peut y être réinsérée.

10. Installation suivant l'une des revendications précédentes, **caractérisée en ce que**, sur la rampe (52) de couteaux, les divers couteaux (28) de coupe, rassemblés en îlots (50), ont autant de couteaux (28) de coupe que le nécessitent des lignes (18) de coupe pour la séparation, au moins provisoire, des récipients (16) d'un bloc (17) de récipients entre eux et/ou d'un autre bloc (17) de récipients voisin.
